# EUROPEAN PATENT APPLICATION

(11) **EP 2 982 846 A1**
(43) Date of publication of application: **10.02.2016**
(21) Application number: 15178248.9
(22) Date of filing: 24.07.2015
(51) Int. Cl.: F02C 3/30, F02C 9/18

(54) **TURBOMACHINE SYSTEM INCLUDING AN INLET BLEED HEAT SYSTEM AND METHOD OF OPERATING A TURBOMACHINE AT PART LOAD**

(30) Priority: 08.08.2014 US 201414455112
(71) Applicant: General Electric Company, Schenectady, NY 12345 (US)
(72) Inventor: KLOSINSKI, Joseph Philip, Atlanta, GA 30339-8402 (US); EKANAYAKE, Sanji, Atlanta, GA 30339 (US); SCIPIO, Alston Ilford, Atlanta, GA 30339 (US)
(74) Representative: Cleary, Fidelma

(57) **Abstract**

A turbomachine system (2) includes a compressor portion (6) having at least one compressor extraction (20), a turbine portion (8) operatively connected to the compressor portion (6), and a combustor assembly (10) including at least one combustor (12) fluidically connected to the compressor portion (6) and the turbine portion (8). A heat recovery steam generator (HRSG) (40) is fluidically connected to the turbine portion (8), and an air inlet system (22) is fluidically connected to the compressor portion (6). An inlet bleed heat (IBH) system (60) is fluidically connected to each of the compressor portion (6), the air inlet system (22) and the HRSG (40). An inlet bleed heat (IBH) system (60)includes a first conduit (70) having a first valve (78) fluidically connecting the compressor extraction (20) and the air inlet system (22), and a second conduit (80) including a second valve (88) connecting one of the HRSG (40) and a secondary stream source (90) with the first conduit (70).

## Description

### BACKGROUND OF THE INVENTION

The subject matter disclosed herein relates to the art of turbomachines and, more particularly to turbomachine system including an inlet bleed heat (IBH) system and method for operating a turbomachine at part load.

Turbomachines typically include a compressor portion, a combustor portion, and a turbine portion. The compressor portion forms a compressed airstream that is introduced into the turbine portion. In a gas turbomachine, a portion of the compressed airstream mixes with products of combustion forming a hot gas stream that is introduced into the turbine portion through a transition piece. The products of combustion are developed in a combustion chamber of a combustor. In the combustor, fuel and air may be passed through a nozzle to form a combustible mixture. The combustible mixture is combusted to form the products of combustion.

The hot gas stream impacts turbomachine airfoils arranged in sequential stages along the hot gas path. The airfoils are generally connected to a wheel which, in turn, may be connected to a rotor. Typically, the rotor is operatively connected to a load. The hot gas stream imparts a force to the airfoils causing rotation. The rotation is transferred to the rotor. Thus, the turbine portion converts thermal energy from the hot gas stream into mechanical/rotational energy that is used to drive the load. The load may take on a variety of forms including a generator, a pump, an aircraft, a locomotive, or the like. It is desirable to reduce turbomachine output and emissions during off-peak hours

### BRIEF DESCRIPTION OF THE INVENTION

According to one aspect of an exemplary embodiment, a turbomachine system includes a compressor portion having at least one compressor extraction, a turbine portion operatively connected to the compressor portion, and a combustor assembly including at least one combustor fluidically connected to the compressor portion and the turbine portion. A heat recovery steam generator (HRSG) is fluidically connected to the turbine portion, and an air inlet system is fluidically connected to the compressor portion. An inlet bleed heat (IBH) system is fluidically connected to each of the compressor portion, the air inlet system and the HRSG. The IBH system includes a first conduit having a first valve fluidically connecting the compressor extraction and the air inlet system, and a second conduit including a second valve connecting one of the HRSG and a secondary steam source with the first conduit.

According to another aspect of an exemplary embodiment, a method of operating a turbomachine in turndown. The method includes directing a first fluid flow from a compressor extraction of a compressor portion of a turbomachine through a first conduit to an air inlet system, and conditioning the first fluid flow with a second fluid flow passing through a second conduit from one of a heat recovery steam generator (HRSG) and a secondary steam source.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the system and method outlined in this invention will be apparent from the following detailed description taken in conjunction with the accompanying drawings in which:
FIG. 1 is a schematic diagram of a turbomachine system, in accordance with an aspect of an exemplary embodiment; and
FIG. 2 is a schematic diagram of a turbomachine system, in accordance with another aspect of an exemplary embodiment.

The detailed description explains embodiments of the invention, together with advantages and features, by way of example with reference to the drawings.

### DETAILED DESCRIPTION OF THE INVENTION

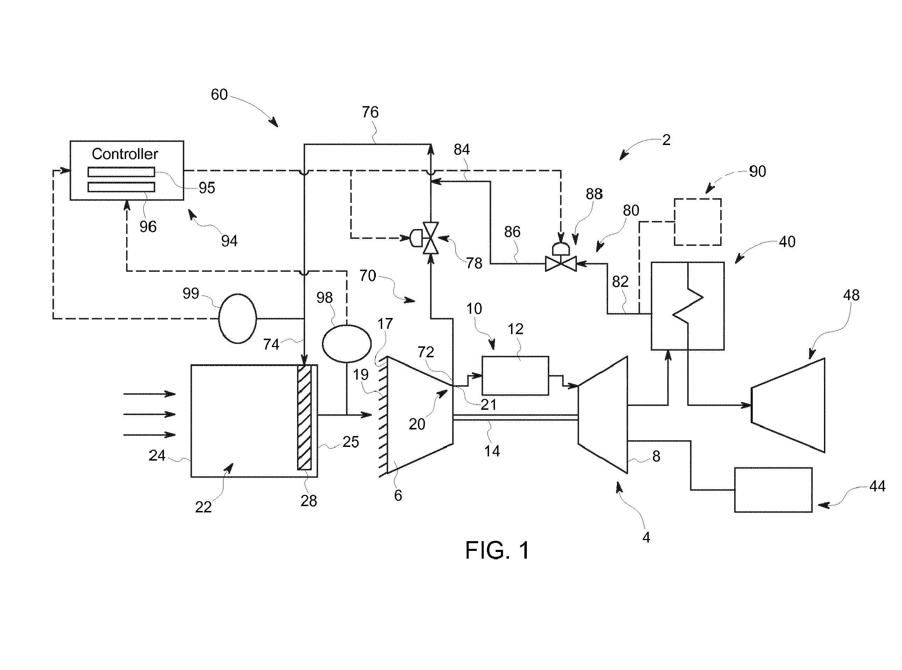

A turbomachine system, in accordance with an exemplary embodiment, is indicated generally at 2, in FIG. 1. Turbomachine system 2 includes a turbomachine 4 having a compressor portion 6 fluidically connected to a turbine portion 8 through a combustor assembly 10. Combustor assembly 10 includes one or more combustors, such as indicated at 12. Compressor portion 6 is also operatively connected to turbine portion 8 through a common compressor/turbine shaft 14. Compressor portion 6 includes an inlet 17 having a plurality of inlet guide vanes 19. Compressor portion 6 also includes a compressor extraction 20. In the exemplary embodiment shown, compressor extraction 20 is fluidically connected to an aft stage 21 of compressor portion 6.

An air inlet system 22 is fluidically connected to inlet 17 of compressor portion 6. Air inlet system 22 includes an ambient air inlet 24, an air outlet 25 and an inlet bleed heat (IBH) manifold 28. IBH manifold 28 may condition ambient air flowing to an inlet of compressor portion 6. Turbine portion 8 is fluidically connected to a heat recovery steam generator (HRSG) 40. Turbine portion 8 may also be coupled to a load 44. Load 44 may take on a variety of forms including a generator, a pump, or the like. HRSG 40 may be fluidically connected to a steam turbine 48.

In accordance with an exemplary embodiment, turbomachine system 2 includes an IBH system 60. As will be discussed more fully below, IBH system 60 further conditions inlet air passing through air inlet system 22 to facilitate turndown. Conditioning, or heating the inlet air, particularly on cold days, e.g., days during which ambient temperatures may be at or below about 59 °F (15°C), leads to a reduction in emissions when turbomachine 4 is operating in turndown mode or at part load operation.

Turndown system 60 includes a first conduit 70 having a first end 72 fluidically connected to compressor extraction 20. First end 72 extends to a second end 74 through an intermediate portion 76. Second end 74 is fluidically coupled to IBH manifold 28. A first valve 78 is arranged in intermediate portion 76 and controls air flow passing through first conduit 70. Turndown system 60 also includes a second conduit 80 having a first end portion 82 coupled to HRSG 40. First end portion 82 extends to a second end portion 84 through an intermediate section 86. Second end portion 84 fluidically connects with intermediate portion 76 downstream of first valve 78. A second valve 88 is arranged in intermediate section 86 of second conduit 80. First end portion 82 may, in the alternative, be connected to with secondary steam source, indicated generally at 90.

A controller 94 is operatively connected to first and second valves 78 and 88. Controller 94 includes a central processing unit (CPU) 95 and a memory 96. Memory 96 stores computer executable instructions that enable controller 94 to establish a desired flow through first and second conduits 70 and 80. Controller 94 is also operatively connected to a first sensor 98 that may be arranged at intermediate portion 76 of first conduit 70, and a second sensor 99 that may be arranged at air outlet 25. With this arrangement, controller 94 senses, through sensors 98 and 99, air temperatures flowing through air inlet system 22 into compressor portion 6.

Controller 94 may selectively operate first and second valves 78 and 88 to deliver an air flow having a desired temperature into IBH manifold 28. Specifically, controller 94 may operate first and second valves 78 and 88 to establish a desired mixture of air passing from compressor extraction 20 and steam passing from HRSG 40 forming a conditioning airstream that is delivered to IBH manifold 28. Controller 94 may selectively control a temperature of the conditioning airstream to establish a desired temperature profile for inlet air passing to compressor portion 6. The desired temperature profile may be based on ambient temperature conditions and load conditions of turbomachine 4. For example, during colder days, it may be desirable to raise inlet air temperature during part load operation to reduce emissions. In this manner, operators may reduce system output at off-peak hours while still remaining emissions compliant.

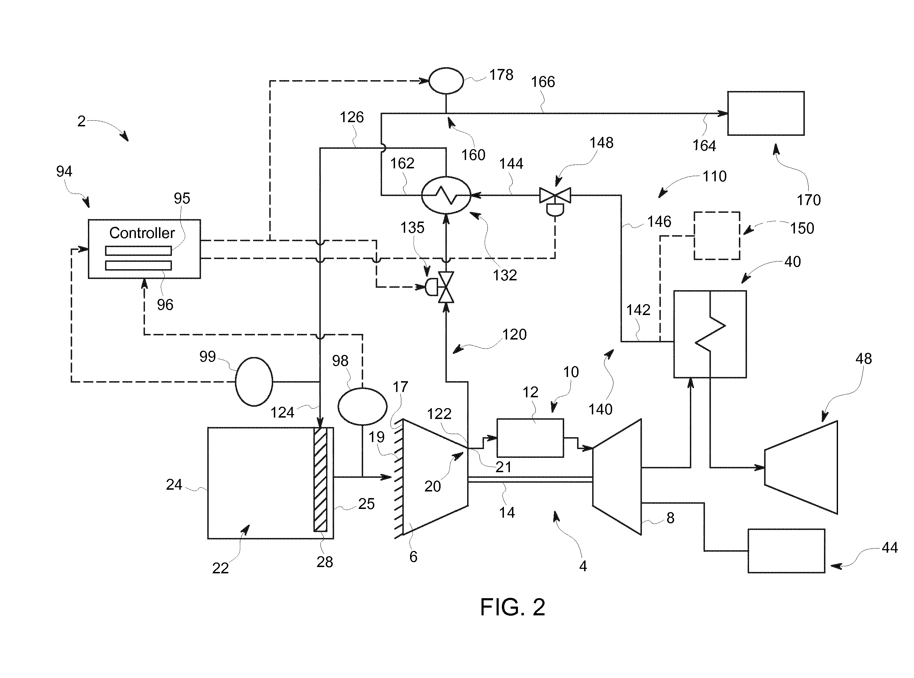

Reference will now follow to FIG. 2, wherein like reference numbers represent corresponding parts in the respective views, in describing a turndown system 110 in accordance with another aspect of an exemplary embodiment. Turndown system 110 includes a first conduit 120 having a first end 122 that fluidically connects with compressor extraction 20. First end 122 extends to a second end 124 through an intermediate portion 126. Second end 124 fluidically connects to IBH manifold 28. Intermediate portion 126 passes through a heat exchanger 132. As will be detailed below, air flow passing from compressor extraction 20 through first conduit 120 is conditioned in heat exchanger 132. A first valve 135 is arranged in intermediate portion 126 upstream of heat exchanger 132.

Turndown system 110 also includes a second conduit 140 having a first end portion 142 fluidically connected to HRSG 40. First end portion 142 extends to a second end portion 144 through an intermediate section 146. Second end portion 144 fluidically connects with heat exchanger 132. A second valve 148 is arranged in intermediate section 146. First end portion 142 may, in the alternative, be connected with a secondary stream source, indicated generally at 150. A third conduit 160 includes a first end section 162 fluidically connected to second end portion 144 of second conduit 140 through heat exchanger 132. First end section 162 extends to a second end section 164 through an intermediate section 166. Second end section 164 is fluidically connected to a component 170. Component 170 may take on a variety of forms including a condenser, a steam turbine 48, or HRSG 40. A flow sensor 178 is arranged in intermediate section 166 of third conduit 160.

In a manner similar to that described above, controller 94 is operatively connected to first and second valves 135 and 148. Controller 94 is also operatively connected to flow sensor 178. In this manner, controller 94 may control a flow of steam through heat exchanger 132 to condition an air flow passing from compressor extraction 20 to IBH manifold 28. More specifically, controller 94 operates first valve 135 to establish a desired air flow to IBH manifold 28. The air flow passes in a heat exchange relationship with a steam flow passing through second conduit 140. Controller 94 controls the steam flow to create a conditioned air flow having a desired temperature profile. The desired temperature profile may be based on ambient temperature conditions and load conditions of turbomachine 4. For example, during colder days, it may be desirable to raise inlet air temperature during part load operation to reduce emissions. In this manner, operators may reduce system output at off-peak hours while still remaining emissions compliant. The steam flow passing from heat exchanger 132 flows to component 170 to enhance system efficiency.

At this point it should be understood that the exemplary embodiments describe a system for conditioning inlet air flow to a compressor portion to reduce emissions during part load operation or turndown. The system selectively conditions an air flow passing from a compressor extraction to an inlet bleed heat (IBH) manifold. The air flow passing from the compressor extraction may be conditioned through direct mixing with a higher temperature steam flow passing from, for example, a heat recovery steam generator (HRSG) or other external source. The air flow passing from the compressor extraction may also be conditioned through an indirect heat exchange with a higher temperature steam flow in a heat exchanger. It should also be understood that while described as originating at a last stages of the compressor portion, the compressor extraction may be fluidically connected to any one or more of a plurality of compressor extractions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine system (2) comprising:
a compressor portion (6) having at least one compressor extraction (20);
a turbine portion (8) operatively connected to the compressor portion (6);
a combustor assembly (10) including at least one combustor (12) fluidically connected to the compressor portion (6) and the turbine portion (8);
a heat recovery steam generator (HRSG) (40) fluidically connected to the turbine portion (8);
an air inlet system (22) fluidically connected to the compressor portion (6);
and
an inlet bleed heat (IBH) system (60) fluidically connected to each of the compressor portion (6), the air inlet system (22) and the HRSG (40), the IBH system (60) includes a first conduit (70) having a first valve (78) fluidically connecting the compressor extraction (20) and the air inlet system (22) and a second conduit (80) including a second valve (88) connecting one of the HRSG (40) and a secondary steam source (90) with the first conduit (70).

2. The turbomachine system (2) according to claim 1, further comprising: a controller (94) operatively connected to the first valve (78) and the second valve (88), the controller (94) selectively opening each of the first and second valves (78 and 88) to direct a heated fluid flow to the air inlet system (22).

3. The turbomachine system (2) according to claim 2, further comprising: at least one sensor (98,99) positioned at the air inlet system (22) and operatively connected to the controller (94), the controller (94) being configured and disposed to establish a desired temperature of the heated fluid flow based on signals from the at least one sensor (98,99).

4. The turbomachine system (2) according to claim 3, wherein the at least one sensor (98,99) comprises a first sensor (98) configured to sense inlet air temperature and a second sensor (99) configured to sense a temperature of an air flow passing from the air inlet system (22) to an inlet (17) of the compressor portion (6).

5. The turbomachine system (2) according to any preceding claim, wherein the second conduit (80) fluidically connects with the first conduit (70) downstream of the first valve (78) or wherein the second conduit (80) is fluidically connected to the first conduit (70).

6. The turbomachine system (2) according to any preceding claim, further comprising: a heat exchanger (132) fluidically connected to each of the first and second conduits (120 and 140), the heat exchanger (132) being configured and disposed to direct a steam flow through the second conduit (140) in a heat exchange relationship with an air flow passing through the first conduit (120).

7. The turbomachine system (2) according to claim 6, further comprising: a third conduit (160) fluidically connected to the second conduit (140) through the heat exchanger (132), the third conduit (160) being configured and disposed to guide a fluid flow away from the heat exchanger (132).

8. The turbomachine system (2) according to claim 6 or 7, wherein each of the first and second valves (135 and 148) are arranged upstream of the heat exchanger (132).

9. The turbomachine system (2) according to any preceding claim, further comprising: an inlet bleed heat (IBH) manifold (28) provided at the air inlet system (22) the first conduit (70) being fluidically connected to the IBH manifold (28).

10. A method of operating a turbomachine at part load, the method comprising:
directing a first fluid flow from a compressor extraction (20) from a compressor portion (6) of a turbomachine (2) through a first conduit (70) to an air inlet system (22); and
conditioning the first fluid flow with a second fluid flow passing through a second conduit (80) from one of a heat recovery steam generator (HRSG) (40) and a secondary stream source (90).

11. The method of claim 10, wherein conditioning the first fluid flow with the second fluid flow includes mixing the first and second fluid flows.

12. The method of claim 10 or 11, wherein the second fluid flow passes in a heat exchange relationship with the first fluid flow in a heat exchanger (132).

13. The method of claim 12, further comprising: directing the second fluid flow from the heat exchanger (132) to one of the HRSG (40), a condenser, and a steam turbine (48).

14. The method of any of claims 10 to 13, further comprising:
sensing an inlet air temperature; and
controlling a temperature of the first fluid flow with the second fluid flow based on the inlet air temperature.

15. The method of claim 14, wherein sensing the inlet air temperature includes sensing air temperature at at least one of an inlet of the air inlet system (22) and an inlet (17) of the compressor portion (6).
